# FASCICULE DE BREVET EUROPEEN

(11) **EP 0 927 311 B1**
(45) Date de publication et mention de la délivrance du brevet: **05.06.2002**
(21) Numéro de dépôt: 97918853.9
(22) Date de dépôt: 19.09.1997
(51) Int. Cl.: F16D 3/18

(54) **ACCOUPLEMENT DE TRANSMISSION**
ANTRIEBSKUPPLUNG
TRANSMISSION COUPLING DEVICE

(30) Priorité: 20.09.1996 BE 9600795
(43) Date de publication de la demande: 07.07.1999
(73) Titulaire: ESCO TRANSMISSIONS, 1831 Diegem (BE)
(72) Inventeur: BOUCQUEY, Paul, Egide, B-1080 Bruxelles (BE)
(74) Mandataire: Claeys, Pierre
(86) Numéro de dépôt international: BE9700110
(87) Numéro de publication internationale: WO9812443

(56) Documents cités:
- EP-A- 0 676 555
- EP-A- 0 677 674

## Description

La présente invention concerne un accouplement de transmission d'un couple de rotation entre un arbre moteur et un arbre récepteur,
- agencé pour permettre un désalignement angulaire et/ou radial et/ou un déplacement axial entre les deux arbres,
- comprenant:
   * deux moyeux qui sont munis chacun d'une denture externe bombée usuellement symétriquement par rapport à un plan perpendiculaire à l'axe de rotation du moyeu, appelé plan de symétrie, et qui sont à fixer l'un sur l'arbre moteur et l'autre sur l'arbre récepteur,
   * un manchon qui présente une denture interne coopérant avec chaque denture externe précitée pour la transmission du couple entre les arbres et qui peut coulisser longitudinalement sur ces dernières, et
   * des moyens de butée agencés pour limiter le coulissement longitudinal du manchon par rapport à au moins un des moyeux.

Les accouplements de ce genre, connus à ce jour par exemple du document EP-A-0 676 555, présentent divers inconvénients importants qui limitent fortement leur durée de vie et/ou qui entraînent des coûts d'entretien et des fréquences d'entretien considérables par rapport aux coûts de l'accouplement lui-même.

Dans certains accouplements connus, une localisation du manchon par rapport aux moyeux est réalisée au moyen de ressorts. Ceux-ci provoquent une corrosion de contact en des endroits critiques de l'accouplement et cela en réduit la durée de vie, entre autres par une pollution du lubrifiant qui y est utilisé. Des ressorts peuvent de plus provoquer un balourd nuisible non seulement à l'accouplement mais également aux mécanismes reliés à ou par l'accouplement. Ce phénomène est encore amplifié par la casse et/ou l'usure éventuelles des ressorts. Une autre nuisance est également produite par une fréquence propre de vibrations axiales non amorties provenant du système des masses en mouvement et ressorts et pouvant générer des forces axiales nuisibles non seulement à l'accouplement lui-même mais aussi aux mécanismes reliés . De plus, l'encombrement d'un système à ressorts limite les déplacements et désalignement autorisés des accouplements par rapport à un encombrement total déterminé de ceux-ci.

Dans d'autres accouplements connus, ladite localisation du manchon est obtenue par des butées mais il s'avère que leurs positions usuelles dans les accouplements provoquent, en cas de désalignement, un mouvement radial relatif important entre butée(s) du manchon et butée(s) du ou des moyeux et il en résulte de la corrosion de contact, de l'abrasion et donc, dans ce cas aussi, une usure importante et une pollution néfaste du lubrifiant. Dans le cas de ces accouplements, il apparaît également que le volume disponible pour un lubrifiant est limité et mal agencé au point d'arriver aisément à des débordements de celui-ci, quelque fois en cours de rotation mais surtout à l'arrêt.

La présente invention est destinée à remédier aux inconvénients précités, d'abord en évitant l'utilisation de ressorts et ensuite en analysant d'une nouvelle manière le fonctionnement d'un accouplement du genre décrit ci-dessus et en déterminant par cela un emplacement favorable des butées.

A cet effet, dans l'accouplement suivant l'invention :
- au moins un des moyeux présente un espace annulaire qui est axé sur l'axe de rotation du moyeu et qui s'étend sensiblement parallèlement à cet axe entre une paroi, portant la denture externe, et une partie du moyeu destinée à la fixation de celui-ci sur l'arbre correspondant, une âme raccordant la paroi à la partie de moyeu tandis que l'espace annulaire est ouvert au moins du coté d'une des deux faces latérales du moyeu, et
- les moyens de butée sont agencés dans l'espace annulaire et y comportent:
   * une butée annulaire qui est fixée au moyeu, perpendiculairement à l'axe de rotation de celui-ci, et qui est située sensiblement à l'endroit du plan perpendiculaire de symétrie précité et,
   * au moins d'un côté de la butée annulaire en considérant la direction de son axe de rotation, un arrêt associé à la butée, qui est disposé en forme d'un anneau d'un diamètre semblable à celui de la butée annulaire, perpendiculairement à l'axe longitudinal du manchon, et qui est fixé à ce dernier par exemple par un élément porteur.

Dans les accouplements connus décrits ci-dessus, une usure importante provient d'un manque d'étanchéité tant dans un sens de perte de lubrifiant sortant de l'accouplement que dans un sens d'entrée d'agents polluants. Ce manque d'étanchéité découle entre autres de mouvements radiaux importants, qui sont imposés aux joints d'étanchéité et qui les rendent inefficaces, et de l'usure de joints d'étanchéité posés aux endroits usuels de ceux-ci dans les accouplements connus.

La même analyse que ci-dessus a amené à trouver une solution à l'inefficacité et à l'usure des joints d'étanchéité montés dans l'accouplement de l'invention pour que ces joints ne subissent plus de déplacement radial.

A cet effet, dans l'accouplement suivant l'invention, une bague d'étanchéité est disposée entre la parrie de moyeu et l'élément porteur précité, de préférence sensiblement à l'endroit du plan de symétrie précité, et ledit élément porteur comporte en outre un flasque de fermeture de l'extrémité correspondante du manchon, présentant un orifice de passage du moyeu et/ou arbre correspondant.

D'autres détails et particularités de l'invention ressortiront des revendications secondaires et de la description des dessins qui sont annexés au présent mémoire et qui illustrent, à titre d'exemple non limitatif, une forme de réalisation avantageuse d'un accouplement suivant l'invention.

La figure 1 représente en section axiale un accouplement de l'invention en une position de départ, alignée.

La figure 2 représente d'une même façon le même accouplement dans une position de désalignement extrême autorisée.

Dans les différentes figures, les mêmes notations de référence désignent des élément identiques ou analogues.

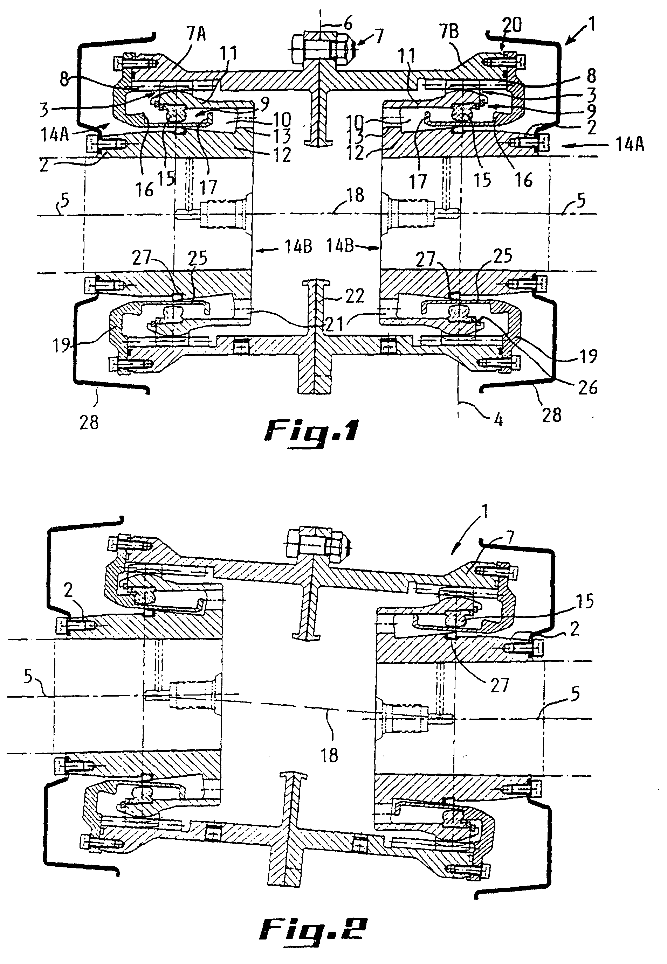

Un accouplement 1 (figure 1) de l'invention fait partie de la famille des accouplements à denture et comporte deux moyeux 2, à monter l'un sur un arbre moteur et l'autre sur un arbre récepteur, représentés en traits interrompus, munis par exemple de canaux connus pour une mise sous pression hydraulique afin de faciliter des montages et démontages. Les moyeux 2 comportent chacun une denture externe 3 usuellement bombée de façon symétrique par rapport à un plan 4 perpendiculaire à l'axe de rotation 5 du moyeu 2 et appelé plan de symétrie 4. Les figures montrent un cas où les moyeux 2 sont identiques, sauf éventuellement en ce qui concerne leurs alésages, et sont montés en symétrie de miroir par rapport à un plan 6 qui (figure 1) est perpendiculaire à leurs axes de rotation 5, lorsque ceux-ci sont superposés, et qui est à mi-chemin entre les moyeux 2 en position de départ alignée.

L'accouplement 1 comporte de plus un manchon 7 de transmission qui présente une denture interne 8, éventuellement interrompue dans sa longueur et usuellement droite, destinée à coopérer avec la denture externe 3 de chaque moyeu 2 en vue de la transmission d'un couple d'un moyeu 2 à l'autre. Le manchon 7 peut coulisser longitudinalement sur les deux dentures externes 3 de façon à permettre un désalignement angulaire et/ou radial et/ou un déplacement axial entre les deux moyeux 2 et donc entre les deux arbres portant ceux-ci.

Des moyens de butée 9 sont agencés dans l'accouplement 1 pour limiter le coulissement longitudinal du manchon 7 par rapport aux moyeux 2.

Suivant l'invention, au moins un des moyeux 2 (les deux suivant les figures) présente un espace annulaire 10 qui est axé sur l'axe de rotation 5 du moyeu 2 et qui s'étend parallèlement à cet axe 5 entre une paroi 11 du moyeu 2, qui porte la denture externe 3, et une partie 12 du moyeu 2 qui est destinée à la fixation de celui-ci sur l'arbre correspondant. Une âme 13 raccorde la paroi 11 à la partie 12. L'espace annulaire 10 est ouvert au moins du côté d'une des deux faces latérales du moyeu 2, la face 14A dans les dessins.

Suivant l'invention, les moyens de butée 9 sont agencés dans cet espace annulaire 10. Ils comportent, d'une part, une butée annulaire 15 qui est fixée au moyeu 2 lui-même, de façon à être perpendiculaire à l'axe de rotation 5 de celui-ci, et qui est située pratiquement à l'endroit du plan de symétrie 4 précité de la denture 3 du moyeu 2 en question. Les moyens de butée 9 comportent de plus, associé à la butée 15, au moins un arrêt 16 ou 17, situé alors d'un côté de la butée annulaire 15 (en considérant la direction de l'axe de rotation 5 correspondant). Cet arrêt 16, 17 est disposé en forme d'anneau perpendiculaire à l'axe longitudinal 18 du manchon 7 et a un diamètre semblable à celui de la butée annulaire 15. L'arrêt 16, 17 est fixé au manchon 7.

Par exemple (figure 1) l'arrêt 16 fait partie d'un flasque 19 fixé sur une face d'extrémité 20 du manchon 7. Par exemple également, l'arrêt 17 peut être porté (d'une façon non représentée) par un ou des supports (non représentés) passant librement à travers une ou des ouvertures 21 réalisées dans l'âme 13 du moyeu 2 et fixés par exemple à un voile 22 du manchon 7.

Le ou les arrêts 16,17 peuvent former un anneau continu ou discontinu.

Par exemple, soit les deux arrêts 16, soit les deux arrêts 17 associés aux deux moyeux 2 peuvent suffire à limiter le coulissement susdit du manchon 7 dans les deux sens.

Soit le ou les arrêts 16, 17, soit de préférence la butée annulaire 15 peut/peuvent être en métal et éventuellement comporter un revêtement en matière amortissante, par exemple en caoutchouc ou en matière synthétique 9 pour éliminer le bruit et un impact de métal sur métal. Cependant dans le cas des figures, la butée 15 est en une matière amortissante et résistante connue de l'homme de métier et les arrêts 16, 17 sont en métal. La position des moyens de butée 9 à l'endroit du plan de symétrie 4 précité, entre les dentures 3, 8 et l'axe de rotation 5, fait qu'entre butée annulaire 15 et arrêt 16, 17 en contact il n'y a pratiquement que du roulement, sans déplacement relatif radial, et cela réduit considérablement tout phénomène d'abrasion et d'usure entre eux.

Avantageusement, il y a de part et d'autre de la butée annulaire 15 d'un ou éventuellement des deux moyeux 2 un arrêt 16 et un arrêt 17 associés à cette même butée 15. Les deux arrêts 16, 17 sont alors disposés l'un vis-à-vis de l'autre à une distance choisie en fonction de la limitation du coulissement.

Dans une forme de réalisation préférée, l'âme 13 est disposée à l'écart du plan de symétrie 4, du côté de la face latérale 14B du moyeu 2 la plus proche de l'autre moyeu 2. La butée annulaire 15 est fixée à la paroi 11 et est à une distance radiale déterminée de ladite partie 12 du moyeu 2. L'arrêt ou, le cas échéant, les deux arrêts 16, 17 associés à cette butée annulaire 15 sont portés par un élément porteur 25 qui s'étend entre la butée 15 et ladite partie de moyeu 12 et qui est fixé au manchon 7, avantageusement à l'extrémité correspondante, par exemple 20, de celui-ci.

Pour son montage, la butée annulaire 15 peut être par exemple constituée par un anneau fendu (métallique, métallique revêtu comme ci-dessus, etc...) et élastique dont on peut, si nécessaire, écarter les deux extrémités de la fente jusqu'à pouvoir le passer autour de l'élément porteur 25 entre les deux arrêts 16 et 17 portés par ce dernier.

La butée annulaire 15 peut être constituée cependant par toute autre(s) pièce(s) démontable(s) comme par deux demi-bagues à fixer à ou dans ladite paroi 11, par exemple par un segment d'arrêt 26.

La butée annulaire 15 peut être constituée par une bague ininterrompue, fixée à ladite paroi 11. Dans ce cas, pour en permettre le montage, l'un des deux arrêts 16 ou 17 associé à la butée annulaire 15 est démontable de l'élément porteur 25 pour pouvoir passer la butée 15 autour de l'élément porteur 25.

L'élément porteur 25 présente avantageusement, entre les deux arrêts 16, 17 associés à la butée annulaire 15, une paroi dont au moins la face interne est cylindrique suivant l'axe longitudinal 18 du manchon 7.

Pour assurer l'étanchéité précitée de l'accouplement 1, celui-ci peut comporter une bague d'étanchéité 27, par exemple d'un type représenté à la figure 1, disposée entre la partie de moyeu 12 et l'élément porteur 25 susdit. Cette bague d'étanchéité 27 peut être disposée de préférence pratiquement à l'endroit du plan de symétrie 4 précité pour qu'elle ne subisse pratiquement pas de déplacement radial lors de désaligements des axes de rotation 5 et longitudinal 18. Lorsque de plus, l'élément porteur porteur 25 comporte (figure 1) le flasque 19 précité agencé pour fermer l'extrémité 20 correspondante du manchon 7 et muni d'un orifice pour le passage du moyeu 2 et/ou de l'arbre correspondant équipé du moyeu 2, il apparaît que l'on obtient une disposition favorable de l'accouplement avec une chambre suffisante et bien agencée pour contenir sans débordement, même à l'arrêt, une réserve suffisante de lubrifiant, surtout à l'endroit des dentures 3 et 8 et pour assurer une étanchéité parfaite dans les deux sens, aussi bien à l'encontre d'une perte de lubrifiant que d'une entrée d'agents polluants.

Il doit être entendu que l'invention n'est nullement limitée aux formes de réalisation décrites et que bien des modifications peuvent être apportée à ces dernières sans sortir du cadre de la présente invention ni de la portée des revendications ci-jointes.

Ainsi, d'autres formes de bague d'étanchéité connues de l'homme de métier ou plusieurs de celles-ci peuvent être montées sur le moyeu 2 ou éventuellement même sur l'élément porteur 25 de façon à ce que par exemple la lèvre d'une bague empêche une sortie de lubrifiant et la lèvre d'une autre empêche une entrée de matières polluantes.

On notera aussi la forme spéciale donnée au contour externe de la partie de moyeu 12 de façon à permettre un désaligement angulaire, tel que celui représenté à la figure 2, sans qu'il n'y ait de contact entre l'élément porteur porteur 25 et cette partie de moyeu 12.

Comme le montrent également les figures, des capots 28 peuvent être fixés aux moyeux 2 pour protéger les orifices de passage de moyeu et/ou d'arbre contre des projections directes dans le cas d'accouplements exposés à des poussières, projection d'eau, etc..., sous un véhicule par exemple.

Le manchon 7 peut comporter deux demi-manchons 7A et 7B sensiblement identiques fixés l'un à l'autre de façon démontable.

## Revendications

1. Accouplement de transmission d'un couple de rotation entre un arbre moteur et un arbre récepteur,
- agencé pour permettre un désalignement angulaire et/ou radial et/ou un déplacement axial entre les deux arbres,
- comprenant:
* deux moyeux (2) qui sont munis chacun d'une denture externe (3) bombée usuellement symétriquement par rapport à un plan de symétrie (4) perpendiculaire à l'axe de rotation (5) du moyeu (2) et qui sont à fixer l'un sur l'arbre moteur et l'autre sur l'arbre récepteur,
* un manchon (7) qui présente une denture interne (8) coopérant avec chaque denture externe (3) précitée pour la transmission du couple entre les arbres et qui peut coulisser longitudinalement sur ces dernières, et
* des moyens de butée (9) agencés pour limiter le coulissement longitudinal du manchon (7) par rapport à au moins un des moyeux (2),
**caractérisé en ce que**:
- au moins un des moyeux (2) présente un espace annulaire (10) qui est axé sur l'axe de rotation (5) du moyeu (2) et qui s'étend sensiblement parallèlement à cet axe (5) entre une paroi (11), portant la denture externe (3), et une partie (12) du moyeu (2) destinée à la fixation de celui-ci sur l'arbre correspondant, une âme (13) raccordant la paroi (11) à la partie de moyeu (12) tandis que l'espace annulaire (10) est ouvert au moins du coté d'une (14A) des deux faces latérales du moyeu, et
- les moyens de butée (9) sont agencés dans l'espace annulaire (10) et y comportent :
* une butée annulaire (15) qui est fixée au moyeu (2), perpendiculairement à l'axe de rotation (5) de celui-ci, et qui est située sensiblement à l'endroit du plan de symétrie (4) précité et,
* au moins d'un côté de la butée annulaire (15) en considérant la direction de son axe de rotation (5), un arrêt (16, 17) associé à la butée (15), qui est disposé en forme d'un anneau d'un diamètre semblable à celui de la butée annulaire (15), perpendiculairement à l'axe longitudinal (18) du manchon (7), et qui est fixé à ce dernier.

2. Accouplement suivant la revendication 1, **caractérisé en ce que**, de part et d'autre de la butée annulaire (15), il y a un arrêt (16, 17) précité associé à celle-ci, les deux arrêts (16, 17) étant disposés l'un vis-à-vis de l'autre à une distance choisie en fonction de la limitation du coulissement.

3. Accouplement suivant la revendication 2, **caractérisé en ce que** :
- l'âme (13) précitée est disposée à l'écart du plan de symétrie (4), du côté de la face latérale (14B) du moyeu (2) la plus proche de l'autre moyeu (2),
- la butée annulaire (15) est fixée à la paroi (11) portant la denture (3) et est à distance radiale de ladite partie de moyeu (12), et
- l'arrêt (16,17), le cas échéant, les deux arrêts (16,17) associés à la butée annulaire (15) sont portés par un élément porteur (25) qui s'étend entre la butée annulaire (15) et ladite partie (12) du moyeu et qui est fixé au manchon (7), de préférence à une extrémité (20) correspondante de celui-ci.

4. Accouplement suivant la revendication 3, **caractérisé en ce que** ledit élément porteur (25) présente entre les deux arrêts (16,17) associés à la butée annulaire (15) une paroi dont au moins la face interne est cylindrique suivant l'axe longitudinal (18) du manchon (7).

5. Accouplement suivant l'une ou l'autre des revendications 3 et 4, **caractérisé en ce qu'**une bague d'étanchéité (27) est disposée entre la partie de moyeu (12) et l'élément porteur (25) précité, de préférence sensiblement à l'endroit du plan de symétrie (4) précité, et **en ce que** ledit élément porteur (25) comporte en outre un flasque (19) de fermeture de l'extrémité (20) correspondante du manchon (7), présentant un orifice de passage du moyeu (2) et/ou arbre correspondant.

## Claims

1. Coupling for transmitting a torque between a drive shaft and a receiving shaft,
- designed to allow an angular and/or radial misalignment and/or an axial displacement between the two shafts,
- comprising:
- two hubs (2) each of which has external toothing (3) usually symmetrically convex with respect to a plane of symmetry (4) perpendicular to the axis (5) of rotation of the hub (2) and which are to be fixed, one to the drive shaft and the other to the receiving shaft,
- a sleeve tube (7) which has internal toothing (8) cooperating with each aforementioned external toothing (3) for transmitting torque between the shafts and which can slide longitudinally along these toothings, and
- stop means (9) designed to limit the longitudinal sliding of the sleeve tube (7) with respect to at least one of the hubs (2),
***characterized in that:***
- at least one of the hubs (2) has an annular space (10) which is centred on the axis (5) of rotation of the hub (2) and which extends substantially parallel to this axis (5) between a wall (11) bearing the external toothing (3) and a part (12) of the hub (2) which is intended to attach this hub to the corresponding shaft, a web (13) connecting the wall (11) to the hub part (12), while the annular space (10) is open at least on the same side as one (14A) of the two lateral faces of the hub, and
- the stop means (9) are arranged in the annular space (10) and therein comprise:
- an annular stop (15) which is fixed to the hub (2) at right angles to the axis (5) of rotation thereof and which is located substantially in the region of the aforementioned plane of symmetry (4), and,
- at least on one side of the annular stop (15) when considering the direction of its axis (5) of rotation, an end stop (16, 17) associated with the stop (15), which is arranged in the form of a ring of a diameter similar to that of the annular stop (15), at right angles to the longitudinal axis (18) of the sleeve tube (7) and which is fixed thereto.

2. Coupling according to claim 1, **characterized in that**, on each side of the annular stop (15) there is an aforementioned end stop (16, 17) associated therewith, the two end stops (16, 17) being arranged one facing the other at a distance that is chosen as a function of the limitation on the sliding.

3. Coupling according to claim 2, **characterized in that**:
- the aforementioned web (13) is placed away from the plane of symmetry (4), on the same side as the lateral face (14B), of the hub (2), closest to the other hub (2),
- the annular stop (15) is fixed to the wall (11) bearing the toothing (3) and is at a radial distance from the said hub part (12), and
- the end stop (16, 17) and as appropriate the two end stops (16, 17) associated with the annular stop (15) are borne by a carrier (25) which extends between the annular stop (15) and the said part (12) of the hub and which is fixed to the sleeve tube (7), preferably at a corresponding end (20) of the latter.

4. Coupling according to claim 3, **characterized in that** the said carrier (25) has, between the two end stops (16, 17) associated with the annular stop (15), a wall, at least the internal face of which is cylindrical along the longitudinal axis (18) of the sleeve tube (7).

5. Coupling according to claim 3 or 4, **characterized in that** a sealing ring (27) is arranged between the hub part (12) and the aforementioned carrier (25), preferably substantially at the location of the said symmetry plane (4), and **in that** the said carrier (25) also has a flange (19) which closes the corresponding end (20) of the sleeve tube (7) and has an orifice through which the corresponding shaft and/or hub (2) can pass.

## Patentansprüche

1. Antriebskupplung für ein Drehmoment zwischen einer antreibenden Welle und einer angetrlebenen Welle,
- die derart angeordnet ist, daß sie einen Winkel- und/oder Radialversatz und/oder eine Axialverschlebung zwischen den beiden Wellen gestattet,
- umfassend:
• zwei Naben (2), die jeweils mit einer Außenverzahnung (3) versehen sind, die üblicherweise symmetrisch zu einer Symmetrieebene (4), die auf die Drehachse (5) der Nabe (2) senkrecht steht, gewölbt ist, und von denen eine auf der antreibenden Welle und die andere auf der angetriebenen Welle zu befestigen ist,
• eine Hülse (7), die eine Innenverzahnung (8) aufweist, die mit jeder vorgenannten Außenverzahnung (3) zur Übertragung des Drehmoments zwischen den Wellen zusammenwirkt und die längs auf diesen letztgenannten gleiten kann, und
• Anschlagmittel (9), die derart angeordnet sind, daß sie das Längsgleiten der Hülse (7) in bezug auf mindestens eine der Naben (2) begrenzen,
**dadurch gekennzeichnet, daß**
- mindestens eine der Naben (2) einen ringförmigen Raum (10) aufweist, der auf der Drehachse (5) der Nabe (2) ausgerichtet ist und sich im wesentlichen parallel zu dieser Achse (5) zwischen einer Wand (11), die die Außenverzahnung (3) trägt, und einem Teil (12) der Nabe (2) erstreckt, der für die Befestigung derselben auf der entsprechenden Welle bestimmt ist, wobei ein Steg (13) die Wand (11) mit dem Nabenteil (12) verbindet, während der ringförmige Raum (10) zumindest auf der Seite einer (14A) der beiden Seitenflächen der Nabe offen ist, und
- die Anschlagmittel (9) in dem ringförmigen Raum (10) angeordnet sind und hierin umfassen:
• einen ringförmigen Anschlag (15), der an der Nabe (2) senkrecht auf die Drehachse (5) derselben befestigt ist und im wesentlichen an der Stelle der vorgenannten Symmetrieebene (4) angeordnet ist, und
• mindestens auf einer Seite des ringförmigen Anschlags (15) bei Betrachtung der Richtung seiner Drehachse (5) eine Sperre (16, 17), die mit dem Anschlag (15) verbunden und in Form eines Ringes mit einem Durchmesser ähnlich jenem des ringförmigen Anschlags (15) senkrecht auf die Längsachse (18) der Hülse (7) angeordnet und auf letztgenannter befestigt ist.

2. Kupplung nach Anspruch 1, **dadurch gekennzeichnet, daß** beiderseits des ringförmigen Anschlags (15) eine vorgenannte, mit diesem verbundene Sperre (16, 17) vorhanden ist, wobei die beiden Sperren (16, 17) einander gegenüberliegend in einem Abstand angeordnet sind, der in Abhängigkeit von der Gleitbegrenzung gewählt wird.

3. Kupplung nach Anspruch 2, **dadurch gekennzeichnet, daß**:
- der vorgenannte Steg (13) in einem Abstand zu der Symmetrieebene (4) auf der Seite der Seitenfläche (14B) der Nabe (2) möglichst nahe der anderen Nabe (2) angeordnet ist,
- der ringförmige Anschlag (15) an der Wand (11), die die Verzahnung (3) trägt, befestigt ist und sich in einem Radialabstand zu dem Nabenteil (12) befindet, und
- die Sperre (16, 17), gegebenenfalls die beiden mit dem ringförmigen Anschlag (15) verbundenen Sperren (16, 17), von einem Trageelement (25) getragen werden, das sich zwischen dem ringförmigen Anschlag (15) und dem Nabenteil (12) erstreckt und an der Hülse (7), vorzugswelse an einem entsprechenden Ende (20) derselben, befestigt ist.

4. Kupplung nach Anspruch 3, **dadurch gekennzeichnet, daß** das Trageelement (25) zwischen den beiden Sperren (16, 17), die mit dem ringförmigen Anschlag (15) verbunden sind, eine Wand aufweist, bei der zumindest die Innenfläche entlang der Längsachse (18) der Hülse (7) zylindrisch ist.

5. Kupplung nach dem einen oder dem anderen der Ansprüche 3 und 4, **dadurch gekennzeichnet, daß** ein Dichtungsring (27) zwischen dem Nabenteil (12) und dem vorgenannten Trageelement (25) vorzugsweise an der Stelle der vorgenannten Symmetrieebene (4) angeordnet ist, und daß das Trageelement (25) ferner einen Flansch (19) zum Verschluß des entsprechenden Endes (20) der Hülse (7) umfaßt, der eine Durchgangsöffnung für die Nabe (2) und/oder entsprechende Welle aufweist.
